# EUROPEAN PATENT APPLICATION

(11) **EP 1 403 604 A1**
(43) Date of publication of application: **31.03.2004**
(21) Application number: 03021169.2
(22) Date of filing: 23.09.2003
(51) Int. Cl.: F27B 9/24

(54) **Roller Kiln**

(30) Priority: 26.09.2002 IT MO20020269
(71) Applicant: IPEG S.p.A. dell'Ing. Mauro Poppi, 42014 Castellarano (IT)
(72) Inventor: Poppi, Mauro, 41049 Sassuolo (Prov. of Modena) (IT); Parasporo, Maria Gabriella, 42031 Baiso (Prov. of Regio Emilia) (IT)
(74) Representative: Modiano, Guido, Dr.-Ing.

(57) **Abstract**

A roller kiln (1), comprising a frame (2) for supporting a firing chamber (3) provided with at least one inlet and at least one outlet for a plurality of articles (M) to be fired and at least one surface (4) for the advancement of the articles, which is interposed between the inlet and the outlet of the firing chamber (3) and is constituted by a bed of motorized rollers (5) in which the opposite end portions protrude at the sides of the firing chamber (3) and are supported so that they can rotate in respective seats (6) that are associated with the frame, and at least one housing (12) that is associated with the frame (2) outside the firing chamber (3) and is adapted to form at least one chamber for containing one of the end portions of at least one of the rollers, which is provided with at least one first opening and with at least one second opening, which are connected respectively to the firing chamber and to the environment outside the firing chamber.

## Description

The present invention relates to a roller kiln.

It is known that continuous kilns are now widely used in production lines of ceramic articles such as tiles and the like, since they allow high flexibility and reduced use of labor.

In particular, roller kilns are known which are substantially constituted by a frame that comprises a firing chamber provided with an inlet and an outlet for the ceramic articles to be fired, between which a surface for the longitudinal advancement of the articles is interposed; said surface is constituted by a bed of motorized rollers that are arranged transversely to said chamber.

A plurality of burners lead into the firing chamber and are supported by the frame above and below the advancement surface.

The end portions of the rollers are arranged so that they protrude externally from the side walls of the frame; each roller has a motorized end and an end that is supported freely by the frame.

Supports are inserted in the side walls of the frame and are constituted by blocks made of a refractory material, known as roller guides, along which through seats are formed in which the rollers are inserted with play.

It is also known that a distinction is generally made between pressurized kilns and vacuum kilns.

Pressurized kilns operate with a pressure inside the firing chamber that is higher than the pressure of the outside environment.

During their operation, part of the hot air tends spontaneously to bleed through the gaps between the rollers and the corresponding seats on the roller guides, causing significant losses of heat into the outside environment and therefore a reduction in the efficiency of the operation of said kiln.

The stream of hot air that exits from the kiln strikes the mechanical elements arranged in the immediate vicinity, causing a deterioration thereof that requires periodic interventions to replace them, and this has a negative effect on the overall maintenance cost of the kiln.

As an alternative, it would be necessary to manufacture said components using materials that withstand high temperatures or refractory materials, which are therefore rather expensive.

Moreover, the leakage of the air that arrives from the firing chamber into the environment that surrounds the kiln increases the level of pollution in the work areas.

Vacuum kilns instead operate with a pressure inside the firing chamber that is lower than the pressure of the surrounding environment.

During their operation, the cold air (at ambient temperature) of the outside environment penetrates the firing chamber through the plays comprised between the rollers and the support, causing an increase in the thermal load required of the burners and therefore a significant increase in the energy consumption and in fumes produced at the stack.

Moreover, the input air stream produces a significant gradient in the temperature distribution inside the firing chamber, which produces an uneven firing of the resulting articles.

Currently, in order to contain hot air leakage, in the case of pressurized kilns, or cold air infiltrations in the case of vacuum kilns, the interspaces formed between each roller and the corresponding seats are generally closed by inserting insulating materials such as ceramic fibers.

However, said fibers tend to be entrained by the motion of the rollers and deteriorate over time; the high thermal load to which they are subjected in fact causes a significant size shrinkage thereof, which restores the connection between the firing chamber and the outside environment.

For these reasons, said fibers must be repositioned and/or replaced periodically.

This operating method is not free from drawbacks, including the fact that it does not ensure a good seal between the kiln and the surrounding environment and therefore does not allow to eliminate the above-cited problems due to the dispersion of heat in the environment or to the infiltration of cold air inside the kilns.

Moreover, the growing attention given to the healthiness and safety of workplaces is gradually leading to the elimination of the use of ceramic fibers, since they are potentially harmful to the health of operators and are considered by Directive 97 of the European Commission as "Category 2 possible carcinogens".

The aim of the present invention is to eliminate the above-noted drawbacks of the prior art, by providing a roller kiln that allows to optimize thermal insulation between the kiln and the surrounding environment, to significantly reduce the exchange of energy between them, to contain energy consumption and environmental pollution, to ensure uniform temperature distribution inside the kiln, and to reduce interventions for replacing the mechanical components.

Within this aim, an object of the present invention is to provide a roller kiln that has a simple structure that is relatively easy to provide in practice, safe in use, effective in operation, and has a relatively low cost.

This aim and these and other objects that will become better apparent hereinafter are achieved by the present roller kiln, comprising a frame for supporting a firing chamber provided with at least one inlet and at least one outlet for a plurality of articles to be fired and at least one surface for the advancement of said articles, which is interposed between said inlet and said outlet and is constituted by a bed of motorized rollers in which the opposite end portions protrude at the sides of said firing chamber and are supported so that they can rotate in respective seats that are associated with said frame, characterized in that it comprises at least one housing that is associated with said frame outside said firing chamber and is adapted to form at least one chamber for containing one of the end portions of at least one of said rollers, which is provided with at least one first opening and with at least one second opening which are connected respectively to said firing chamber and to the environment outside said firing chamber.

Further characteristics and advantages of the present invention will become better apparent from the detailed description of a preferred but not exclusive embodiment of a roller kiln, illustrated by way of nonlimiting example in the accompanying drawings, wherein:
Figure 1 is a schematic partial sectional view, taken along a transverse plane, of a roller kiln according to the invention;
Figure 2 is an enlarged-scale view of a portion of Figure 1;
Figure 3 is a schematic plan view of the portion of Figure 2.

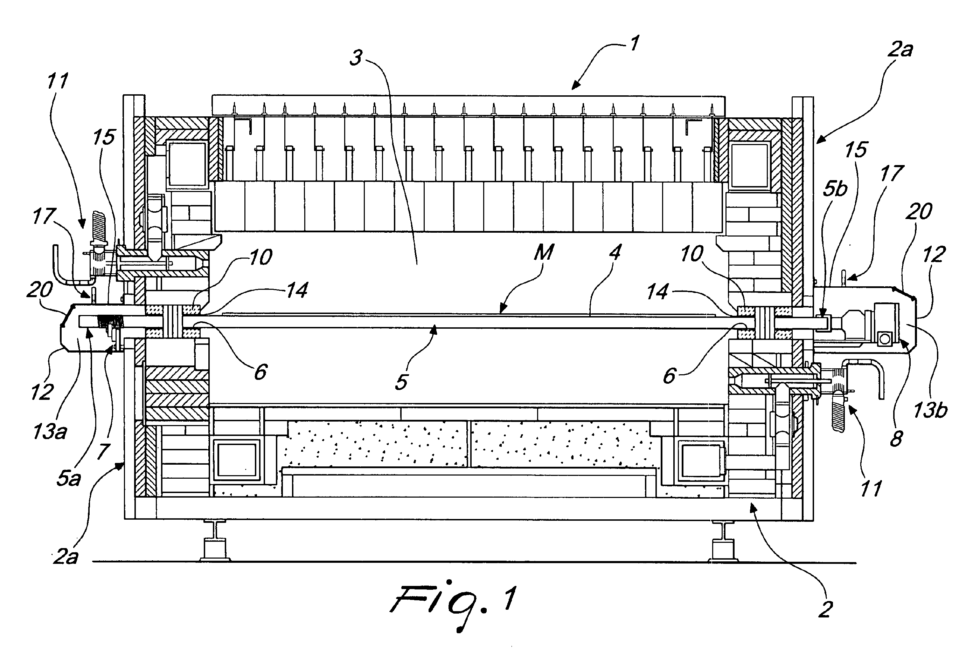

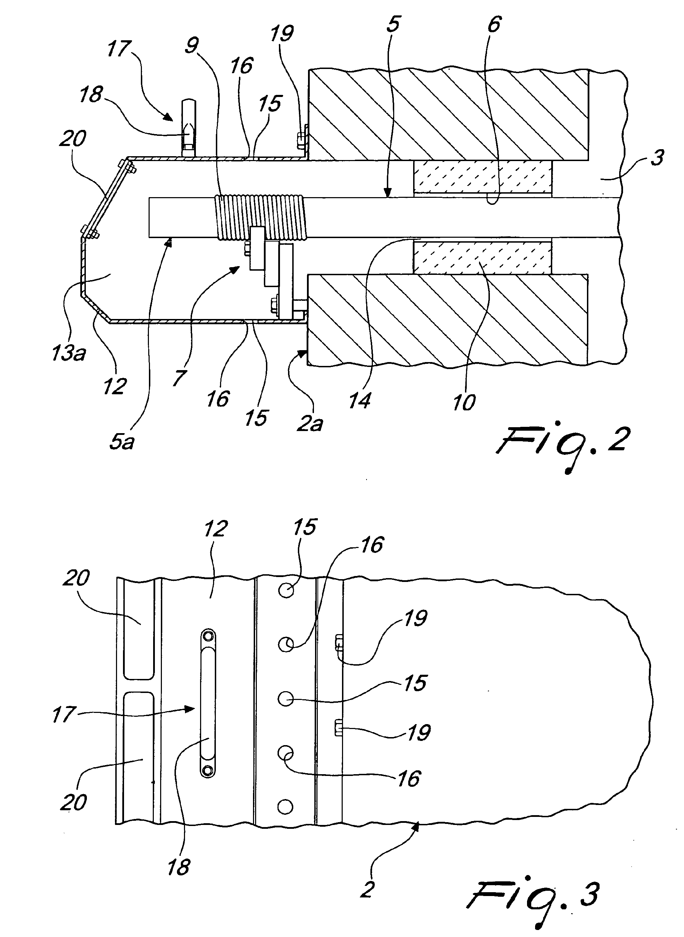

With reference to the figures, the reference numeral 1 generally designates a roller kiln for firing ceramic articles M, such as tiles or the like.

The kiln 1 comprises a frame 2 for supporting a firing chamber 3, which is constituted by a sort of channel that has walls made of a material of the refractory type and is provided at its ends with an inlet and an outlet, not shown in the figures, for a plurality of articles M to be fired.

The kiln 1 further comprises a horizontal surface 4 for the longitudinal advancement of the articles M through the firing chamber 3, from the inlet toward the outlet, which is constituted by a bed of motorized rollers 5, in which the mutually opposite end portions are arranged so as to protrude from side walls 2a of the frame 2 and are supported so that they can rotate in respective through seats 6 formed in said frame.

The rollers 5 are arranged transversely to the advancement direction of the articles M along the firing chamber 3, and are mutually parallel and spaced with a constant pitch.

Each roller 5 has an end 5a that is supported freely by supporting means 7 that are fixed externally to the frame 2 and are constituted by conventional bearings, free wheels or the like, and an opposite end 5b that is associated with motor means 8 of the conventional type.

A protection 9 is provided on the end 5a of each roller 5 and is interposed between said roller and the supporting means 7 in order to contain friction and wear caused by contact.

The rollers 5 are generally associated with the motor means 8 by interposing transmission units of the chain or gear type, which are not shown because they are of a conventional kind.

At the rollers 5, the side walls 2a of the frame 2 are provided with supports 10 that are constituted by blocks of refractory material, known as roller guides, which are mutually juxtaposed so as to cover the entire length of the firing chamber 3 and on which the seats 6 are provided; the end portions of the rollers 5 are inserted with play in said seats.

Such play must be conveniently sized, as is known in the field, so as to allow relative motion between the rollers 5 and the supports 10.

The kiln 1 is provided with means for heating the air inside the firing chamber 3; said means are constituted by a plurality of conventional burner units 11, which are distributed along the length of said chamber and are mutually offset above and below the surface 4.

Depending on the flow-rate of the air introduced or aspirated from the firing chamber 3, the kiln 1 can be used in pressurized conditions or in vacuum conditions.

The kiln 1 comprises two housings 12, which are fixed to the side walls 2a at the end portions of the rollers 5 externally to the firing chamber 3 and on mutually opposite sides thereof.

The housings 12 are constituted by respective contoured metal plates that have an elongated shape and are made of a material of a type that withstands the thermal stresses that occur.

A chamber 13 for containing the end portions of a plurality of rollers 5 is formed between each housing 12 and the corresponding side wall 2a and is provided with first openings 14 and second openings 15, which are respectively connected to the firing chamber 3 and to the environment outside said chamber.

The supporting means 7 are accommodated inside the containment chamber 13a arranged at the ends 5a; the motor means 8 and the optional transmission means are accommodated inside the containment chamber 13b arranged at the ends 5b.

Conveniently, it is possible to provide a plurality of housings 12, which are arranged side by side on each side of the frame 2, each accommodating the end portions of a given number of rollers 5.

The first openings 14 of each containment chamber 13 are constituted by the annular gaps formed between the end portions of the rollers 5 accommodated in said chamber and the corresponding seats 6.

The second openings 15 of each containment chamber 13 are instead constituted by a plurality of through holes 16 that are distributed along the length of the corresponding housing 12.

Advantageously, the extension and shape of the second openings 15 are sized so as to contain the pressure variation between the firing chamber 3 and the containment chambers 13.

The overall surface area of the second openings 15 is smaller than that of the first openings 14.

As is known, the flow of air that passes through a given cross-section is substantially proportional to its area and to the square root of the pressure difference between the regions upstream and downstream of said cross-section.

By conveniently choosing the dimensions of the second openings 15 it is therefore possible to produce a strong pressure variation at the holes 16, accordingly maintaining inside the containment chambers 13 a pressure that is close to the pressure that occurs in the firing chamber 3.

If the kiln 1 operates in vacuum, for example, the flow of air that tends to penetrate from the outside environment toward the firing chamber 3 is proportional to the total area of the first openings 14 multiplied by the square root of the pressure difference between the containment chambers 13 and the firing chamber 3, i.e., to the total area of the second openings 15 multiplied by the square root of the pressure difference between the environment and the containment chambers 13.

In view of the fact that the total area of the first openings 14 cannot be reduced below certain values because it is necessary to maintain said play between the seats 6 and the end portions of the rollers 5, it is noted that by conveniently sizing the second openings 15 it is possible to concentrate the pressure difference at the passage of the air from the environment toward the containment chambers 13, reducing the air flow entering the firing chamber 3.

The pressure inside the kiln 1 therefore increases weakly in passing from the firing chamber 3, where it is substantially constant and lower than the ambient pressure, to the containment chambers 13; said pressure increase is due to the variation in the passage section that occurs at the supports 10.

A substantially uniform pressure distribution is reestablished inside the containment chambers 13.

Finally, the kiln 1 comprises means 17 for introducing pressurized air in each containment chamber 13; said means cooperate in order to keep the pressure level inside said chambers proximate to, and slightly higher than, the pressure inside the firing chamber 3 if the kiln 1 operates in pressurized conditions.

The means 17 comprise a duct 18 that is associated with the corresponding housing 12 and is connected to the corresponding containment chamber 13.

Conveniently, each housing 12 is detachably fixed to the frame 2 by way of conventional threaded elements 19 and is provided with a plurality of openable inspection ports 20.

It is noted that this characteristic allows easy access to the end portions of the rollers 5, to the supporting means 7, to the motor means 8 and to any transmission means in order to check their condition and perform maintenance or replacement thereof.

In practice it has been found that the described invention achieves the intended aim and objects.

The invention thus conceived is susceptible of numerous modifications and variations, all of which are within the scope of the appended claims.

All the details may further be replaced with other technically equivalent ones.

In practice, the materials employed, as well as the shapes and dimensions, may be any according to requirements without thereby abandoning the scope of the protection of the appended claims.

The disclosures in Italian Patent Application No. M02002A000269, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A roller kiln, comprising a frame for supporting a firing chamber provided with at least one inlet and at least one outlet for a plurality of articles to be fired and at least one surface for the advancement of said articles, which is interposed between said inlet and said outlet and is constituted by a bed of motorized rollers in which the opposite end portions protrude at the sides of said firing chamber and are supported so that they can rotate in respective seats that are associated with said frame, **characterized in that** it comprises at least one housing that is associated with said frame outside said firing chamber and is adapted to form at least one chamber for containing one of the end portions of at least one of said rollers, which is provided with at least one first opening and with at least one second opening which are connected respectively to said firing chamber and to the environment outside said firing chamber.

2. The kiln according to claim 1, **characterized in that** said second opening has a surface area and/or configuration that is adapted to contain the pressure difference between said firing chamber and said containment chamber.

3. The kiln according to one or more of the preceding claims, **characterized in that** the surface area of said second opening is substantially smaller than the surface area of said first opening.

4. The kiln according to one or more of the preceding claims, **characterized in that** said housing is provided with at least one through hole that is adapted to form said second opening.

5. The kiln according to one or more of the preceding claims, **characterized in that** said housing is constituted by a contoured metal plate that is associated externally with said frame at the end portion of said roller, the interspace comprised between the metal plate and the frame being adapted to form the containment chamber.

6. The kiln according to one or more of the preceding claims,
**characterized in that** said housing is made of a material of a type that withstands thermal stresses.

7. The kiln according to one or more of the preceding claims, **characterized in that** said first opening is constituted by the annular gap that is comprised between the end portion of said roller and the corresponding seat.

8. The kiln according to one or more of the preceding claims, **characterized in that** said housing has an elongated shape, said containment chamber being adapted to accommodate inside it the end portions of a plurality of said rollers.

9. The kiln according to one or more of the preceding claims, **characterized in that** it comprises at least two of said housings, which are associated with said frame on opposite sides of said firing chamber and are adapted to form respective chambers for containing the end portions of a plurality of said rollers.

10. The kiln according to one or more of the preceding claims, **characterized in that** at least one portion of said housing is detachably associated with said frame.

11. The kiln according to one or more of the preceding claims, **characterized in that** it comprises means for introducing pressurized air in said containment chamber, the pressure inside the firing chamber being substantially higher than the pressure of the outside environment.

12. The kiln according to one or more of the preceding claims, **characterized in that** said input means comprise at least one duct that is associated with said housing and is connected to said containment chamber.
